# EUROPÄISCHE PATENTSCHRIFT

(11) **EP 1 026 811 B1**
(45) Veröffentlichungstag und Bekanntmachung des Hinweises auf die Patenterteilung: **26.11.2003**
(21) Anmeldenummer: 99121309.1
(22) Anmeldetag: 26.10.1999
(51) Int. Cl.: H02K 5/12, H02K 11/04, H02K 3/52, H02K 1/14

(54) **Brensstoff-Elektromotorpumpe**
Electric motor-pump assembly for fuel
Ensemble moteur electrique-pompe pour combustible

(30) Priorität: 03.02.1999 DE 19904162
(43) Veröffentlichungstag der Anmeldung: 09.08.2000
(73) Patentinhaber: TI Automotive (Neuss) GmbH, 41456 Neuss (DE)
(72) Erfinder: Zacher, Wolfgang, Dr., 04720 Döbeln (DE); Rathke, Ronald, 04720 Döbeln (DE)
(74) Vertreter: von Kirschbaum, Alexander, Dipl.-Ing.

(56) Entgegenhaltungen:
- DE-A- 4 309 382
- DE-A- 4 331 803
- DE-C- 4 222 394
- US-A- 5 454 697
- US-A- 5 785 013

## Beschreibung

Die Erfindung betrifft eine Brennstoff-Elektromotorpumpe für Brennkraftmaschinen. Derartige Elektromotorpumpen sind hinlänglich bekannt und weisen häufig einen mechanisch kommutierten Gleichstrommotor auf.

Es sind jedoch bereits Pumpen bekannt, die von einem elektronisch kommutierten Gleichstrommotor angetrieben werden, wobei diese jedoch öfters für Kühlwasser und dergleichen eingesetzt werden und als Spaltrohrpumpen (DE 195 45 561 A1) bekannt sind. Das Spaltrohr dient vornehmlich der Abdichtung der Pumpenkammer nach aussen.

Aus der DE 42 22 394 A1 ist eine Pumpe-Motoreinheit bekannt, bei der zwischen der Pumpe und dem Antriebsmotor eine Kühlwand vorgesehen ist, an der wenigstens ein Leistungsteil einer Drehzahlsteuerung zur Kühlung angeordnet ist.

Aus der DE 43 31 803 A1 ist ein elektronisch kommutierter Elektromotor für den Antrieb einer Förderpumpe bekannt, bei dem Maßnahmen zur Halterung der am Rotor angeordneten Permanentmagnete vorgeschlagen werden.
Es heißt dort, daß die mit der Statorwicklung verbundenen Stromanschlüsse mit einer nicht dargestellten elektronischen Kommutiereinrichtung verbindbar sind. Diese Kommutiereinrichtung ist somit nicht direkt am Motor angeordnet.

Aus der DE 43 09 382 A1 ist eine Brennstoff-Elektromotor pumpe für Brennkraft maschinen nach dem Oberbegriff des Anspruchs 1 bekannt.

Es besteht jedoch Bedarf nach Brennstoffpumpen, die von elektronisch kommutierten Gleichstrommotoren antreibbar sind, wobei dieser Ausführung offensichtlich Probleme anhaften, die einer Ausbreitung entgegenstehen.

Hiervon ausgehend liegt der Erfindung die Aufgabe zugrunde, Massnahmen aufzufinden, mit denen eine Brennstoff-Elektromotorpumpe mit elektronischer Kommutierung problemlos betrieben und hergestellt werden kann.

Diese Aufgabe ist durch die im Kennzeichen des Anspruchs 1 angegebenen Merkmale gelöst worden. Vorteilhafte Weiterbildungen der Erfindung sind mit den Merkmalen der Unteransprüche angegeben.

Ein Ausführungsbeispiel der Erfindung ist in der Zeichnung dargestellt und wird nachfolgend beschrieben.

Die Zeichnung zeigt:
**Fig. 1** einen Schnitt einer erfindungsgemässen Brennstoff-Elektromotorpumpe,
**Fig. 2** eine Ansicht eines Stanzgitters eines Elektronikmoduls nach Fig. 1,
**Fig. 3** das Elektronikmodul als Einzelteil,
**Fig. 4** einen Polständer nach Fig. 1,
**Fig. 5** ein Kreissegment mit Wicklung.

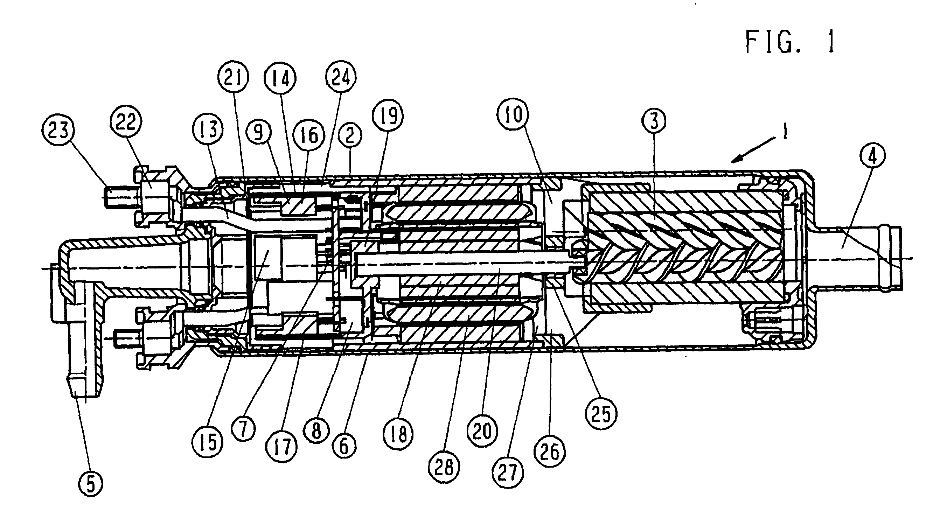

Fig. 1 zeigt einen Schnitt einer erfindungsgemässen Brennstoff-Elektromotorpumpe 1 für Brennkraftmaschinen, bestehend aus einem elektronisch kommutierten Gleichstrommotor 2 und einem Pumpenwerk 3, beide gemeinsam in einem einen Saug- und einen Druckanschluss 4, 5 aufweisenden Gehäuse 6 angeordnet und dort von Brennstoff umströmt.

Bei dieser Elektromotorpumpe 1 ist nun vorgesehen, dass eine Kommutierungsschaltung 7 in einer Motorkammer 8 angeordnet ist, die Teil eines Elektronikmoduls 9 und gegenüber brennstoffführenden Gehäusekammem 10 abgedichtet ist.

Durch diese Massnahme ist eine sichere Abdichtung der Elektronikbauteile gegenüber dem aggressiven Brennstoff gegeben und darüber hinaus kühlt der die Motorkammer 8 umgebende Brennstoff die Elektronikbauteile, d. h. führt deren Verlustwärme ab. Es ergibt sich von selbst, dass diese abkühlende Massnahme auch günstig für die Polwicklungen ist, die so ebenfalls mit dem kühlenden Brennstoff in Berührung stehen können, was bisher noch nicht möglich war.

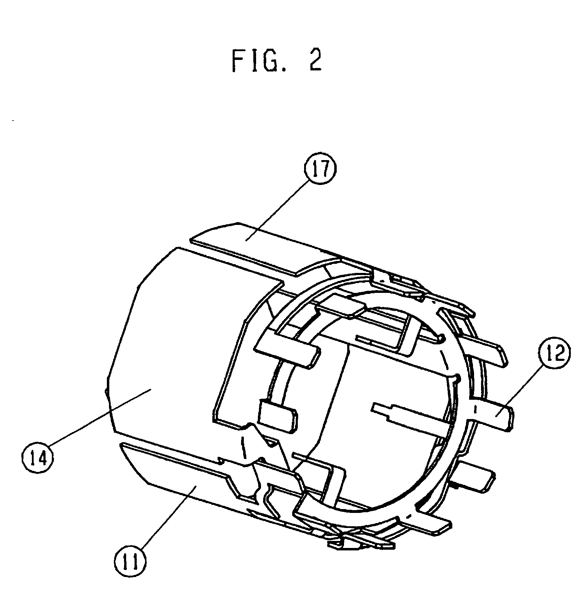

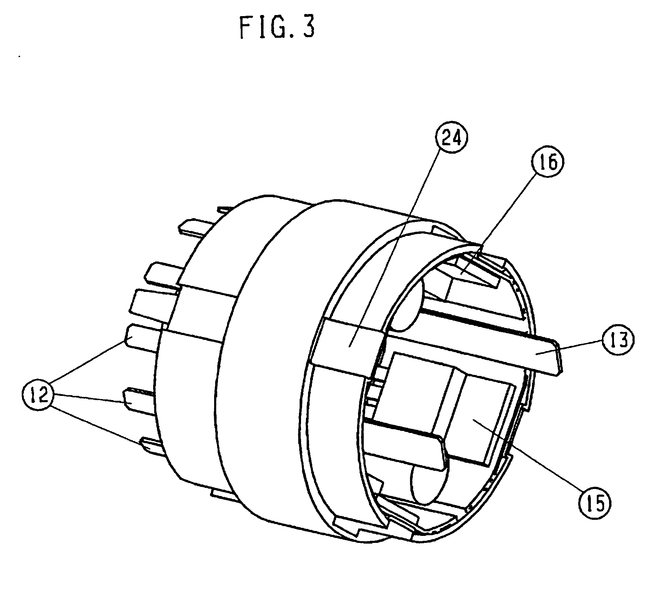

Es ist desweiteren vorgesehen, dass das Elektronikmodul 9 ein in Kunststoff eingespritztes Stanzgitter 11 (in Fig. 2 und 3 dargestellt) aufweist, von dem steckbare Wicklungsanschlüsse 12 und Motoranschlusskontaktleitungen 13 aus dem Kunststoff herausragen. Das Stanzgitter 11 bildet gleichzeitig Kühlkörper 14, die Wärme abführen, für Bauteile 15, 16 der Leistungselektronik der Kommutierungsschaltung 7. Diese Kühlkörper 14 sind mit ihren aussenliegenden Mantelflächen 17, die ebenfalls mit einer dünnen Kunststoffschicht beschichtet sind, mit den brennstoffführenden Gehäusekammem 10 verbunden, wie in Fig. 1, 2 und 3 dargestellt ist.

Hierdurch findet über die Kühlkörper 14 eine erhöhte Wärmeabfuhr von den Bauteilen 15, 16 statt. Dadurch, dass das Elektronikmodul 9 auf der einem Innenläufer 18 zugewandten Seite als Lagerschild 19 ausgebildet ist und eine Läuferwelle 20 lagert, ist eine Bauteilereduzierung erreicht, wobei das Lagerschild 19 andererseits als die Motorkammer 8 ausgebildet ist, mit einer Vergussmasse gefüllt und ggf. durch einen Kammerdeckel 21 verschlossen ist.

Hierdurch liegt eine einfache konstruktive Ausbildung vor. Durch diesen Kammerdeckel 21 ragen die abgedichteten Motoranschlusskontaktleitungen 13 hindurch und sind in der brennstoffführenden Gehäusekammer 10 mit innenliegenden Abschnitten 22 von Anschlusszapfen 23 verbunden, die aus dem Gehäuse 6 herausragen. Dort werden sie mit einer elektrischen Spannungsquelle verbunden.

Es ist vorgesehen, dass das Elektronikmodul 9 an den aussenliegenden Mantelflächen 17 der Kühlkörper 14 Kühlkanäle 24 aufweist, die vom Brennstoff mit hoher Geschwindigkeit durchströmt werden. Hierdurch wird die Verlustwärmeabführung ebenfalls zusätzlich erhöht.

Als nächstes Merkmal ist vorgesehen, dass die Läuferwelle 20 andererseits in einem das Pumpenwerk 3 aufnehmenden Lagerschild 25 gelagert ist, das brennstoffdurchströmte Durchbrüche 26 aufweist, die in eine Polständerkammer 27 führen, die andererseits mit den Kühlkanälen 24 verbunden ist.

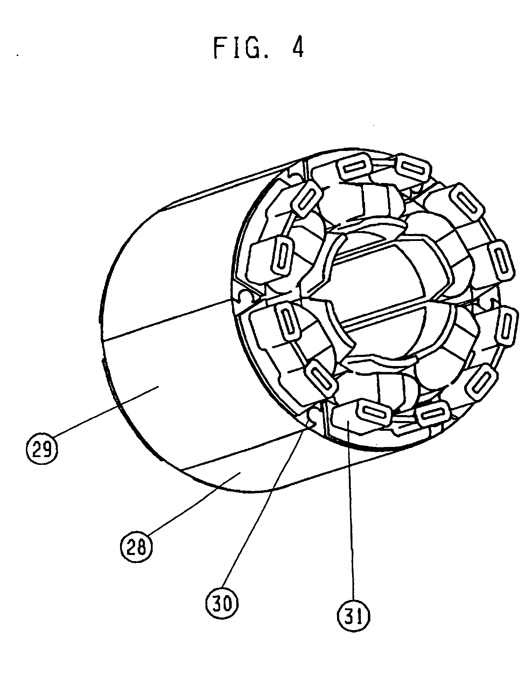

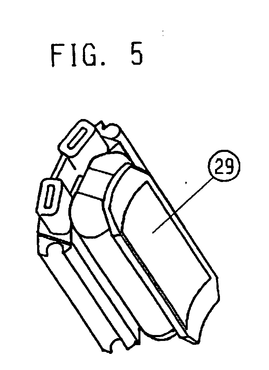

Auch diese Massnahme dient der Bauteilereduzierung und ebenso, dass der Polständer 28 aus mehreren Kreisringsegmenten 29 besteht (Fig. 4 und 5), deren Anzahl der Polzahl entspricht und die als baugleiche Teile ausgeführt und mittels einer Zahn-Zahnlücken-Verzahnung 30 zusammengefügt sind.
. Dadurch, dass die Kreisringsegmente 29 angespritzte Aufnahmefassungen 31 für Anschlussterminals der Wicklungen aufweisen, die von den aus dem Elektronikmodul 9 herausragenden Wicklungsanschlüssen 12 ausgefüllt sind, lässt sich eine vorteilhafte, d. h. kostengünstige Montage erreichen.

Bei Betrieb der Brennstoff-Elektromotorpumpe 1 wird das Pumpenwerk 3 gedreht und über den Sauganschluss 4 Brennstoff angesaugt, durch Pumpenkammem hindurch in die gegenüber dem Sauganschluss 4 abgedichtete Gehäusekammer 10 gefördert, und aus dieser über die Durchbrüche 26 in die Polständerkammer 27 und aus dieser über die Kühlkanäle 24 zum Druckanschluss 5.
Auf dieser Wegstrecke durch die Brennstoff-Elektromotorpumpe 1 werden alle in dem Gehäuse 6 bzw. in den Gehäusekammern 10 ggf. auftretenden Wärmenester ausreichend gekühlt.

## Patentansprüche

1. Brennstoff-Elektromotorpumpe (1) für Brennkraftmaschinen, bestehend aus einem elektronisch kommutierten Gleichstrommotor (2) und einem Pumpenwerk (3), beide gemeinsam in einem einen Saug- und einen Druckanschluss (4, 5) aufweisenden Gehäuse (6) angeordnet und dort von Brennstoff umströmt, und wobei die Kommutierungsschaltung (7) in einer Motorkammer (8) angeordnet ist, die Teil eines Elektronikmoduls (9) und gegenüber brennstoffführenden Gehäusekammern (10) abgedichtet ist, wobei das Elektronikmodul (9) ein in Kunststoff eingespritztes Stanzgitter (11) aufweist, von dem steckbare Wicklungsanschlüsse (12) und Motoranschlusskontaktleitungen (13) aus dem Kunststoff herausragen, **dadurch gekennzeichnet, dass** das stanzgitter gleichzeitig Kühlkörper (14) für Bauteile (15, 16) der Leistungselektronik der Kommutierungsschaltung (7) bildet, welche kühlkörper mit ihren aussenliegenden Mantelflächen (17) mit den brennstoffführenden Gehäusekammem (10) verbunden sind.

2. Elektromotorpumpe nach Anspruch 1, **dadurch gekennzeichnet, dass** das Elektronikmodul (9) auf der einem Innenläufer (18) zugewandten Seite als Lagerschild (19) ausgebildet ist und eine Läuferwelle (20) lagert und andererseits als die Motorkammer (8) ausgebildet ist, wobei die Motorkammer (8) mit einer Vergussmasse gefüllt ist und ggf. zusätzlich durch einen Kammerdeckel (21) verschlossen ist, durch den die abgedichteten Motoranschlusskontaktleitungen (13) hindurchragen und in der brennstoffführenden Gehäusekammer (10) mit innenliegenden Abschnitten (22) von Anschlusszapfen (23) verbunden sind, die aus dem Gehäuse (6) herausragen.

3. Elektromotorpumpe nach Anspruch 2, **dadurch gekennzeichnet, dass** das Elektronikmodul (9) an den aussenliegenden Mantelflächen (17) der Kühlkörper (14) Kühlkanäle (24) aufweist, die vom Brennstoff durchströmt sind.

4. Elektromotorpumpe nach Anspruch 3, **dadurch gekennzeichnet, dass** die Läuferwelle (20) andererseits in einem das Pumpenwerk (3) aufnehmenden Lagerschild (25) gelagert ist, das brennstoffdurchströmte Durchbrüche (26) aufweist, die in eine Polständerkammer (27) führen, die andererseits mit den Kühlkanälen (24) verbunden ist.

5. Elektromotorpumpe nach Anspruch 4, **dadurch gekennzeichnet, dass** der Polständer (28) aus mehreren Kreisringsegmenten (29) gebildet ist, deren Anzahl der Polzahl entspricht und die als baugleiche Teile ausgeführt und mittels einer Zahn-Zahnlücken-Verzahnung (30) zusammengefügt sind.

6. Elektromotorpumpe nach Anspruch 5, **dadurch gekennzeichnet, dass** die Kreisringsegmente (29) angespritzte Aufnahmefassungen (31) für Anschlussterminals der Wicklungen aufweisen, die von den aus dem Elektronikmodul (9) herausragenden Wicklungsanschlüssen (12) ausgefüllt sind.

## Claims

1. Electric motor-driven fuel pump (1) for internal combustion engines, comprising an electronically commutated d.c. motor (2) and a pump mechanism (3), which are both jointly disposed in a housing (6) having a suction and a discharge connection (4, 5) and around which fuel flows there, and wherein the commutating circuit (7) is disposed in a motor chamber (8), which is part of an electronic module (9) and is sealed off from fuel-carrying housing chambers (10), wherein the electronic module (9) comprises a punched grid (11), which is injected into plastics material and from which plug-in winding terminations (12) and motor connection contact lines (13) project out of the plastics material, **characterized in that** the punched grid simultaneously forms cooling bodies (14) for components (15, 16) of the power electronics of the commutating circuit (7), which cooling bodies are connected by their outer lateral surfaces (17) to the fuel-carrying housing chambers (10).

2. Electric motor-driven pump according to claim 1, **characterized in that** the electronic module (9) at the side facing an internal rotor (18) is designed as an end shield (19) and supports a rotor shaft (20) and at the other side is designed as the motor chamber (8), wherein the motor chamber (8) is filled with a casting compound and optionally additionally closed by a chamber lid (21), through which the sealed motor connection contact lines (13) project and are connected in the fuel-carrying housing chamber (10) to internal portions (22) of connecting pins (23), which project from the housing (6).

3. Electric motor-driven pump according to claim 2, **characterized in that** the electronic module (9) on the outer lateral surfaces (17) of the cooling bodies (14) has cooling channels (24), through which the fuel flows.

4. Electric motor-driven pump according to claim 3, **characterized in that** the rotor shaft (20) is supported at the other end in an end shield (25), which receives the pump mechanism (3) and has openings (26), through which fuel flows and which lead into a pole stator chamber (27), which is connected at the other end to the cooling channels (24).

5. Electric motor-driven pump according to claim 4, **characterized in that** the pole stator (28) is formed from a plurality of ring segments (29), the number of which corresponds to the number of poles and which take the form of identically constructed parts and are joined together by means of a tooth/tooth space indented joint (30).

6. Electric motor-driven pump according to claim 5, **characterized in that** receiving sockets (31) for connecting terminals of the windings are moulded on the ring segments (29) and are filled by the winding terminations (12) projecting from the electronic module (9).

## Revendications

1. Pompe à moteur électrique (1) pour combustible pour moteurs thermiques, constitué d'un moteur à courant continu (2) commuté électroniquement et d'un mécanisme de pompe (3), tous deux montés ensemble dans un boîtier (6) présentant un branchement d'admission et un branchement de pression (4, 5) et entouré là par du combustible, et dans lequel le circuit de commutation (7) est disposé dans une chambre de moteur (8), qui fait partie d'un module électronique (9) et est étanchéifié vis-à-vis de chambres de boîtier (10) acheminant du combustible, dans lequel le module électronique (9) présente une grille découpée (11) injectée en matière plastique, de laquelle des branchements de bobinages (12) enfichables et des pattes de contact pour branchements de moteurs (13) sortent hors de la matière plastique, **caractérisée en ce que** la grille découpée constitue dans le même temps des corps de refroidissement (14) pour des composants (15, 16) de l'électronique de puissance du circuit de commutation (7), lesquels corps de refroidissement sont reliés aux chambres de boîtier (10) acheminant du combustible, par leurs surfaces enveloppantes extérieures (17).

2. Pompe à moteur électrique selon la revendication 1, **caractérisée en ce que** sur le côté orienté vers un induit intérieur (18) le module électronique (9) est réalisé en flasque (19) et supporte un arbre d'induit (20) et est d'autre part réalisé en chambre de moteur (8), la chambre de moteur (8) étant remplie avec une masse de moulage et le cas échéant fermée par un couvercle de chambre (21), par lequel les pattes de contact de branchements moteurs (13) étanchéifiées sortent et sont reliées, dans la chambre de boîtier (19) acheminant du combustible, à des sections intérieures (22) de tétons de branchement (23), qui font saillie du boîtier (6).

3. Pompe à moteur électrique selon la revendication 2, **caractérisée en ce que** le module électronique (9) présente aux surfaces enveloppantes (17) extérieures des corps de refroidissement (14) des canaux de refroidissement (24), qui sont traversés par le combustible.

4. Pompe à moteur électrique selon la revendication 3, **caractérisée en ce que** l'arbre d'induit (20) d'autre part est supporté dans une flasque (25) logeant le mécanisme de pompe (3), qui présente des passages (26) traversés de combustible, qui conduisent dans une chambre de support polaire (27), qui d'autre part est reliée aux canaux de refroidissement (24).

5. Pompe à moteur électrique selon la revendication 4, **caractérisée en ce que** le support polaire (28) est constitué de plusieurs segments de cercle (29), dont le nombre correspond au nombre de pôles et qui sont réalisés en pièces identiques et sont joints au moyen d'un assemblage (30) à dents et entredents.

6. Pompe à moteur électrique selon la revendication 5, **caractérisée en ce que** les segments de cercle (29) présentent des montures de logement (31) injectées pour des terminaisons de branchement des bobinages, qui sont remplies des branchements de bobinage (12) saillant du module électronique (9).
